(19)

**Europäisches Patentamt**
**European Patent Office**
**Office européen des brevets**

(11) **EP 3 345 335 B1**

(12) **EUROPEAN PATENT SPECIFICATION**

(45) Date of publication and mention
of the grant of the patent:
**12.05.2021 Bulletin 2021/19**

(51) Int Cl.:
***H04L 9/00*** *(2006.01)*

(21) Application number: **16795389.2**

(22) Date of filing: **16.11.2016**

(86) International application number:
**PCT/EP2016/077884**

(87) International publication number:
**WO 2018/091084 (24.05.2018 Gazette 2018/21)**

(54) **HOMOMORPHIC BASED METHOD AND SYSTEM FOR SECURELY AGGREGATING DATA**

HOMOMORPHES VERFAHREN UND SYSTEM FÜR SICHERE DATENAGGREGATION

PROCÉDÉ ET SYSTÈME HOMOMORPHES D'AGRÉGATION SÉCURISÉE DE DONNÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.07.2018 Bulletin 2018/28**

(73) Proprietor: **HUAWEI TECHNOLOGIES CO., LTD.
Shenzhen, Guangdong 518129 (CN)**

(72) Inventor: **SMYTH, Benjamin
80992 Munich (DE)**

(74) Representative: **Thun, Clemens et al
Mitscherlich PartmbB
Patent- und Rechtsanwälte
Sonnenstraße 33
80331 München (DE)**

(56) References cited:
**WO-A1-2012/103896      WO-A1-2016/051122**

- **ZEKERIYA ERKIN ET AL: "Private Computation of Spatial and Temporal Power Consumption with Smart Meters", 26 June 2012 (2012-06-26), APPLIED CRYPTOGRAPHY AND NETWORK SECURITY, SPRINGER BERLIN HEIDELBERG, BERLIN, HEIDELBERG, PAGE(S) 561 - 577, XP047007128, ISBN: 978-3-642-31283-0 paragraph [0004] - paragraph [0006]**

- **ANNA BISELLI ET AL: "Protection of consumer data in the smart grid compliant with the German smart metering guideline", SMART ENERGY GRID SECURITY, ACM, 2 PENN PLAZA, SUITE 701 NEW YORK NY 10121-0701 USA, 8 November 2013 (2013-11-08), pages 41-52, XP058034208, DOI: 10.1145/2516930.2516933 ISBN: 978-1-4503-2492-2**

- **MUSTAFA MUSTAFA A ET AL: "DESA: A decentralized, efficient and selective aggregation scheme in AMI", ISGT 2014, IEEE, 19 February 2014 (2014-02-19), pages 1-5, XP032596206, DOI: 10.1109/ISGT.2014.6816376 [retrieved on 2014-05-15]**

- **KOMNINOS NIKOS ET AL: "Survey in Smart Grid and Smart Home Security: Issues, Challenges and Countermeasures", IEEE COMMUNICATIONS SURVEYS & TUTORIALS, vol. 16, no. 4, 26 December 2012 (2012-12-26), pages 1933-1954, XP011565148, DOI: 10.1109/COMST.2014.2320093 [retrieved on 2014-11-20]**

- **Payal V.Parmar ET AL: "Survey of Various Homomorphic Encryption algorithms and Schemes", International Journal of Computer Applications, 18 April 2014 (2014-04-18), pages 26-32, XP055689888, DOI: 10.5120/15902-5081 Retrieved from the Internet: URL:https://pdfs.semanticscholar.org/9a93/ 308bfe8ca2fee294fc3adc926039bc61aa27.pdf**

EP 3 345 335 B1

**(Cont. next page)**

• **Yin Hu: "Improving the Efficiency of Homomorphic Encryption Schemes", , 1 May 2013 (2013-05-01), XP055689905, WORCESTER POLYTECHNIC INSTITUTE Retrieved from the Internet: URL:https://web.wpi.edu/Pubs/ETD/Available /etd-042513-154859/unrestricted/YHu.pdf [retrieved on 2020-04-28]**
• **Shahzadi Farah ET AL: "An experimental study on Performance Evaluation of Asymmetric Encryption Algorithms", , 1 December 2012 (2012-12-01), XP055689909, Retrieved from the Internet: URL:https://pdfs.semanticscholar.org/2e6f/ 3d4f10c64cc307485c6cb963e9987d674a60.pdf? _ ga=2.187164462.766217502.1588080114-196846 8416.1588080114 [retrieved on 2020-04-28]**

**Description**

TECHNICAL FIELD

In general, the present invention relates to cryptosystems. More specifically, the present invention relates to a method and system for securely aggregating data.

BACKGROUND

Cryptosystems are used in a large variety of communication systems for ensuring such services as data confidentiality, data integrity, authentication, non-repudiation and/or privacy and are often based on some form of encryption scheme.

An encryption scheme enciphers a plaintext to a ciphertext with an encryption key. The encryption scheme is secure if deciphering the ciphertext to recover the plaintext requires the decryption key corresponding to the encryption key. Thus, encryption schemes enable confidential communication between a decentralized party or a plurality of decentralized parties (herein also referred to as clients), and a centralized party (herein also referred to as server), whom constructed the decryption key. That is, the plaintext is only revealed to the centralized party, i.e. the server.

For example, WO 2016/051122A1 refers to a method for validating data received by a first party from a second party, the data comprising an aggregate sum of units of data recorded by one or more metering devices, the method comprising: receiving, at the first party, the aggregate sum of units of data from the second party and an encrypted aggregate sum of the units of data from a message aggregator to which each metering device has reported its readings, the aggregate sum being encrypted using an encryption key associated with the second party, encrypting the sum of the units of the data received from the second party using the encryption key; and comparing the result of encrypting the sum of the units of data received from the second party with the encrypted aggregate sum received from the message aggregator.

Further, WO 2012/103896A1 refers to a method for operating a smart grid including a plurality of smart meters, said smart meters being configured to monitor at least one physical measured quantity and to provide measurement results of said at least one physical measured quantity to a central entity, is characterized in the following steps: said smart grid is partitioned into groups $G$ of smart meters $sm_i$, such that each of said smart meters belongs to exactly one group, all smart meters $sm_i$ of one of said groups $G$ encrypt their measured value $e_i$ by applying a bihomomorphic encryption scheme $E_{ki}$ and send it to said central entity, one smart meter per group is designated as key aggregator to which all smart meters $sm_i$ of that group send their key $k_i$ employed for said encryption, said key aggregator computes the aggregation of all received keys $k_i$ and sends the aggregated key $K$ to said central entity, said central entity aggregates all received encrypted measured values $e_i$ and decrypts said aggregation by employing said aggregated key $K$. Furthermore, a corresponding smart grid is disclosed.

Sometimes, an encryption scheme can be generalized to a distributed encryption scheme, whereby the decryption key is shared between multiple parties, such that deciphering ciphertexts requires the participation of each party. Thus, distributed encryption schemes enable confidential communication between a plurality of decentralized parties, and one or more centralized parties, whom constructed the decryption key. That is, such schemes enable confidential communication between individuals and groups. Threshold encryption schemes generalize distributed encryption schemes by enabling the deciphering of ciphertexts using a subset of the decryption key shares.

Under the above notion of an encryption scheme, key construction is "centralized". For example, a centralized server would construct a key, rather than decentralized clients. Key construction is also centralized under the above notion of a distributed encryption scheme. For example, a centralized group would construct a key, rather than decentralized individuals. By comparison, in some of the encryption schemes that follow, key construction is "decentralized". For example, clients would construct keys, rather than servers. In other words, "centralized" as used herein refers to actions performed by a group or an organization, whereas "decentralized" refers to actions performed by an individual entity.

SUMMARY

It is an object of the invention to provide an improved method and system for securely aggregating data from a plurality of clients in such a way that the data from an individual client is not revealed and the aggregated data is only revealed to a server. The foregoing and other objects are achieved by the subject matter of the independent claims. Further implementation forms are apparent from the dependent claims, the description and the figures.

BRIEF DESCRIPTION OF THE DRAWINGS

Further embodiments of the invention will be described with respect to the following figures, wherein:

Fig. 1 shows a schematic diagram illustrating a system for securely aggregating data according to an embodiment; and
Fig. 2 shows a schematic diagram illustrating a method for securely aggregating data according to an embodiment.

In the figures, identical reference signs will be used for identical or functionally equivalent features.

DETAILED DESCRIPTION OF THE EMBODIMENTS

In the following description, reference is made to the accompanying drawings, which form part of the disclosure, and in which are shown, by way of illustration, specific aspects in which the present invention may be placed. It will be appreciated that the invention may be placed in other aspects and that structural or logical changes may be made without departing from the scope of the invention. The following detailed description, therefore, is not to be taken in a limiting sense, as the scope of the invention is defined by the appended claims.

For instance, it will be appreciated that a disclosure in connection with a described method will generally also hold true for a corresponding device or system configured to perform the method and vice versa. For example, if a specific method step is described, a corresponding device may include a unit to perform the described method step, even if such unit is not explicitly described or illustrated in the figures. Moreover, in the following detailed description as well as in the claims, embodiments with functional blocks or processing units are described, which are connected with each other or exchange signals. It will be appreciated that the invention also covers embodiments which include additional functional blocks or processing units that are arranged between the functional blocks or processing units of the embodiments described below.

Finally, it is understood that the features of the various exemplary aspects described herein may be combined with each other, unless specifically noted otherwise.

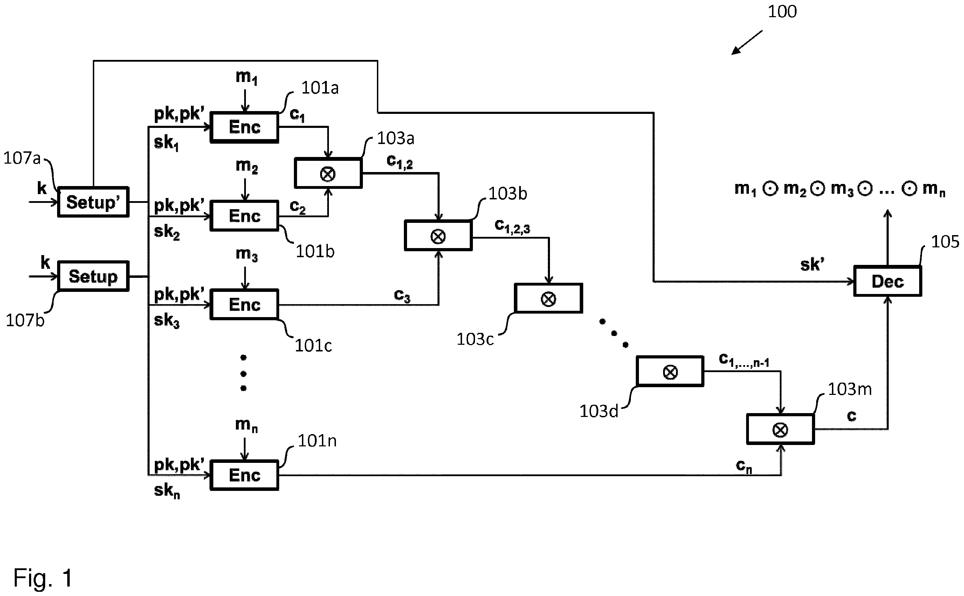

Figure 1 shows a schematic diagram illustrating a system 100 for aggregating data according to an embodiment.

The system 100 comprises a plurality of clients 101a-n, including a first client 101a and a second client 101b, wherein the first client 101a and the second client 101b each have access to a client encryption key pk, a respective first and second share $sk_1$, $sk_2$ of a client decryption key sk and a server encryption key pk', wherein the first client 101a is configured to encrypt its data $m_1$ on the basis of the client encryption key pk, its first share $sk_1$ of the client decryption key sk and the server encryption key pk' for generating encrypted data $c_1$ and wherein the second client 101b is configured to encrypt its data $m_2$ on the basis of the client encryption key pk, its second share $sk_2$ of the client decryption key sk and the server encryption key pk' for generating encrypted data $c_2$. In an embodiment, the plurality of clients 101a-n could be smart meters, mobile phones, personal computers, laptop computers, tablet computers or other devices configured to collect data and to communicate with a server.

Moreover, the system 100 comprises a homomorphic combination unit 103a configured to combine the encrypted data $c_1$ from the first client 101a with the encrypted data $c_2$ from the second client 101b by means of a homomorphic operation on the basis of the server encryption key pk' for generating a homomorphic combination $c_{1,2}$ of the encrypted data $c_1$ from the first client 101a and the encrypted data $c_2$ from the second client 101b such that the homomorphic combination $c_{1,2}$ depends on the server encryption key pk', but does not depend on the client encryption key pk, the share $sk_1$ of the client decryption key sk of the first client 101a and the share $sk_2$ of the client decryption key sk of the second client 101b. In an embodiment, the homomorphic combination unit 103a is configured to combine the encrypted data $c_1$ from the first client 101a with the encrypted data $c_2$ from the second client 101b by means of a homomorphic operation on the basis of the server encryption key pk' based on the El Gamal encryption scheme or a variant thereof, as will be described in more detail further below.

A homomorphic encryption scheme is generally associated with two operators. One of the operators combines a pair of enciphered plaintexts into a single ciphertext, such that applying the other operator to the pair of plaintexts produces a plaintext equal to the plaintext enciphered by the single ciphertext. For instance, ciphertexts enciphering plaintexts 3 and 5 can be combined to derive a ciphertext enciphering plaintext 8. Hence, homomorphic encryption schemes allow aggregation, without deciphering. Homomorphic encryption schemes were designed for use with decentralized decryption keys. Nevertheless, use with centralized decryption keys is also possible. Thus, homomorphic encryption schemes can be considered in the following two modes.

In the first mode, a client constructs the decryption key. Thus, in this mode, homomorphic encryption schemes enable a client, whom constructed the decryption key, to delegate aggregation to untrusted parties (including, but not limited to, a server or computationally powerful data centers), such that plaintexts enciphered by the ciphertexts are not revealed to the delegate.

In the second mode, a server constructs the decryption key. In comparison with the previous mode, delegation possibilities are more limited. In particular, in this mode, homomorphic encryption schemes only enable aggregation to be delegated to untrusted parties, such that the plaintexts enciphered by the ciphertexts are not revealed to the delegate, assuming the delegate does not know the decryption key. Hence, clients cannot delegate aggregation when the delegate knows the decryption key, in particular, aggregation cannot be delegated to the server.

Sometimes, a homomorphic encryption scheme can be generalized to a distributed, homomorphic encryption scheme, whereby the decryption key is shared between multiple parties, such that deciphering ciphertexts requires the participation of each party. Thus, a distributed, homomorphic encryption scheme can extend the delegation possibilities by distributing trust. In particular, distributed, homomorphic encryption schemes enable aggregation to be delegated to untrusted parties, such that plaintexts enciphered by the ciphertexts are not revealed to the delegate, assuming the delegate does not know all of the decryption key shares.

Moreover, the system 100 comprises a server 105 (or centralized unit) configured to decrypt the homomorphic combination $c_{1,2}$ of the encrypted data $c_1$ from the first client 101a and the encrypted data $c_2$ from the second client 101b on the basis of a server decryption key sk'. The result of this decryption is given by $m_1 \, O \, m_2$, i.e. the homomorphic combination of the original data $m_1$ and $m_2$ of the first and second client 101a, 101b, wherein O denotes a homomorphic operator. The aggregation $m_1 \, O \, m_2$ could be, for instance, a sum or a multiplication of the original data $m_1$ and $m_2$. Although the server 105 can decrypt the homomorphic combination $c_{1,2}$ of the encrypted data $c_1$ from the first client 101a and the encrypted data $c_2$ from the second client 101b, it cannot decrypt the encrypted data $c_1$ from the first client 101a or the encrypted data $c_2$ from the second client 101b itself, because the server 105 does not have access to the shares $sk_1$, $sk_2$ of the client decryption key sk.

In an embodiment, the system 100 further comprises a third client 101c (and possibly further clients) and a further homomorphic combination unit 103b. The third client 101c has access to the client encryption key pk as well, a third share $sk_3$ of the client decryption key sk and the server encryption key pk and is configured to encrypt its data $m_3$ on the basis of the client encryption key pk, its third share $sk_3$ of the client decryption key sk and the server encryption key pk' for generating encrypted data $c_3$ from the third client 101c. The further homomorphic combination unit 103b is configured to combine the encrypted data $c_3$ from the third client 101c by means of a homomorphic operation on the basis of the server encryption key pk' with the homomorphic combination $c_{1,2}$ of the encrypted data $c_1$ from the first client 101a and the encrypted data $c_2$ from the second client 101b for creating a homomorphic combination $c_{1,2,3}$ of the encrypted data $c_1$ from the first client 101a, the encrypted data $c_2$ from the second client 101b and the encrypted data $c_3$ from the third client 101c such that the homomorphic combination $c_{1,2,3}$ depends on the server encryption key pk', but does not depend on the client encryption key pk, the share $sk_1$ of the client decryption key sk of the first client 101a, the share $sk_2$ of the client decryption key sk of the second client 101 b and the share $sk_3$ of the client decryption key sk of the third client 101c. The server 105 is configured to decrypt the homomorphic combination $c_{1,2,3}$ of the encrypted data $c_1$ from the first client 101a, the encrypted data $c_2$ from the second client 101b and the encrypted data $c_3$ from the third client 101c on the basis of the server decryption key sk'. The result of this decryption is given by $m_1 \, O \, m_2 \, O \, m_3$, i.e. the homomorphic combination of the original data $m_1$, $m_2$ and $m_3$ of the first, second and third client 101a, 101b and 101c. As will be appreciated, in the case of three clients 101a-c the server 105 no longer will be able to decrypt the homomorphic combination $c_{1,2}$ of the encrypted data $c_1$ from the first client 101a and the encrypted data $c_2$ from the second client 101b. More generally, for n clients 101a-n the server 105 cannot decrypt homomorphic combinations $c_{1,...,k}$ for k<n.

This is because, the system 100 implements a self-aggregating encryption scheme, i.e. a distributed, homomorphic encryption scheme that enciphers a plaintext to a ciphertext with an encryption key and a share of the decryption key, such that deciphering the ciphertext to recover the plaintext requires the remaining shares of the decryption key. The ciphertext can be combined with ciphertexts enciphered with the encryption key and the remaining shares of the decryption key (such that each ciphertext contains a distinct share), and the ciphertext that results from the combination can be deciphered to recover the plaintext without the decryption key.

In an embodiment, the system 100 further comprises one or more setup devices 107a, 107b. The one or more setup devices 107a, 107b are configured to generate the keys used by the plurality of clients 101a-n and the server 105 on the basis of one or more security parameters k defining, for instance, the length of the keys to be used, or the like. In an embodiment, the encryption keys are public keys and the decryption keys are private keys. For an embodiment based on the El Gamal encryption scheme or a variant thereof, the private key can be some integer x and the public key is g^x, where g is some parameter. In an embodiment based on the El Gamal encryption scheme or a variant thereof, each client 101a-n is configured construct a private key (i.e. decryption key) share $x_i$ and the value $h_i = g^{x_i}$ such that the public (i.e. encryption) key is $(h_1, ... , h_n)$.

In the following, an embodiment of the encryption performed by the clients 101a-n will be described in more detail. Let us denote the setup devices 107a, 107b as Setup, the clients or encryption devices 101a-n by Enc, the homomorphic devices as $\otimes$ and $\odot$, and the server or decryption device 105 by Dec.

In the following, the output of a device D based on the inputs $v_1, ..., v_n$ is denoted as $D(v_1, ..., v_n)$. The assignment

of a value v to a variable x is denoted as $x \leftarrow v$. In addition, the notations $c \otimes_{pk} c'$ for $\otimes(pk, c, c')$ and $m \odot_{pk} m'$ for $\odot(pk, m, m')$ are used for the homomorphic operations. When the use of pk is clear from the context, $\otimes_{pk}$ and $\odot_{pk}$ are herein abbreviated as $\otimes$ and $\odot$, respectively.

In this embodiment, the setup devices 107a, 107b comprise a key generation mechanism based on the El Gamal encryption scheme or a variant thereof and the server 105 uses a decryption algorithm based on the El Gamal encryption scheme or a variant thereof. Likewise, in this embodiment, the homomorphic combination units 103-m are based on the El Gamal encryption scheme or a variant thereof. Other encryption schemes can be used as well, such as Benaloh, Goldwasser-Micali, Paillier, and RSA.

In the embodiment shown in figure 1, each client 101a-n is configured to encrypt its data $m_i$ on the basis of its client encryption key pk, its share $sk_i$ of the client decryption key sk and the server encryption key pk', i.e. to generate the encrypted the data as follows:

$$c_i \leftarrow Enc'(pk', m_i)$$

$$c_i \leftarrow c_i \otimes (1, ((pk_1 * \ldots * pk_{i-1})/(pk_{i+1} * \ldots * pk_n))^{\wedge}sk_i),$$

wherein Enc'(...) denotes the enciphering algorithm of the El Gamal encryption scheme, $\otimes$ denotes the homomorphic combination operator of the El Gamal encryption scheme or a variant thereof, the operator "*" denotes multiplication in the relevant group, the operator "^" denotes the exponentiation operator, pk', $pk_1$, ..., $pk_n$ are El Gamal public (i.e. encryption) keys and $sk_i$ is an El Gamal private (i.e. decryption) key corresponding to public key $pk_i$, such that $pk = (pk_1, \ldots, pk_n)$. The above encryption performed by the i-th client 101i can be denoted as follows:

$$Enc((pk_1, \ldots, pk_n), sk_i, pk', m_i).$$

Thus, for this embodiment, it follows that for all security parameters k, integers n, plaintexts $m_1$, ..., $m_n$, and computations:

$$(pk_1, sk_1) <- Setup(k); \ldots; (pk_n, sk_n) <- Setup(k); (pk', sk) <- Setup(k);$$

$$c_1 <- Enc((pk_1, \ldots, pk_n), sk_1, pk, m_1); \ldots; c_n <- Enc((pk_1, \ldots, pk_n), sk_n, pk, m_n);$$

$$c <- c1 \otimes \ldots \otimes c_n$$

that

$$Dec(sk, c) = m_1 \odot \ldots \odot m_n.$$

In the following, an example based on the El Gamal encryption scheme will be provided. In the El Gamal encryption scheme $Enc'(pk, m) = (g^{\wedge}r, pk^{\wedge}r * m)$ for some integer r (also referred to as "a nonce"), where g denotes a generator and $pk = g^{\wedge}sk$ denotes the public key corresponding to secret key sk. According to a variant of the El Gamal encryption scheme m can be replaced by $g^{\wedge}m$.

In the El Gamal encryption scheme the following relation holds:

$$(a,b) \otimes (a',b') = (a*a', b*b').$$

For the case of only two clients 101a, 101b the encrypted data can be generated in the following manner (in line with the more general case described above):

$$c_1 \leftarrow Enc'(pk', m_1)$$

$$c_1 \leftarrow c_1 \otimes (1, (1/pk_2)^\wedge sk_1)$$

$$c_2 \leftarrow Enc'(pk', m_2)$$

$$c_2 \leftarrow c_2 \otimes (1, (pk_1/1)^\wedge sk_2).$$

With the above definition of Enc'() for the El Gamal encryption scheme this can be written in the following way, for some integers $r_1$ and $r_2$:

$$c_1 \quad = (g^\wedge r_1, pk'^\wedge r_1 * m_1) \otimes (1, (1/pk_2)^\wedge sk_1)$$
$$= (g^\wedge r_1 * 1, pk'^\wedge r_1 * m_1 * (1/pk_2)^\wedge sk_1)$$
$$= (g^\wedge r_1, pk'^\wedge r_1 * m_1 * (1/pk_2)^\wedge sk_1)$$
$$c_2 \quad = (g^\wedge r_2, pk'^\wedge r_2 * m_2) \otimes (1, (pk_1/1)^\wedge sk_2)$$
$$= (g^\wedge r_2, pk'^\wedge r_2 * m_2 * (pk_1/1)^\wedge sk_2)$$

The homomorphic combination of $c_1$ and $c_2$ is given by $c_{1,2}$ as:

$$c_{1,2} \quad = c_1 \otimes c_2$$
$$= (g^\wedge r_1, pk'^\wedge r_1 * m_1 * (1/pk_2)^\wedge sk_1) \otimes (g^\wedge r_2, pk'^\wedge r_2 * m_2 * (pk_1/1)^\wedge sk_2)$$
$$= (g^\wedge r_1 * g^\wedge r_2, pk'^\wedge r_1 * m_1 * pk'^\wedge r_2 * m_2 * (1/pk_2)^\wedge sk_1 * (pk_1/1)^\wedge sk_2)$$
$$= (g^\wedge(r_1 * r_2), pk'^\wedge(r_1 * r_2) * m_1 * m_2 * (1/pk_2)^\wedge sk_1 * (pk_1/1)^\wedge sk_2)$$

Since in the El Gamal encryption scheme $pk_i = g^\wedge sk_i$ it follows that:

$$c_{1,2} \quad = (g^\wedge(r_1 * r_2), pk'^\wedge(r_1 * r_2) * m_1 * m_2 * (1/g^\wedge sk_2)^\wedge sk_1 * (g^\wedge sk_1/1)^\wedge sk_2)$$
$$= (g^\wedge(r_1 * r_2), pk'^\wedge(r_1 * r_2) * m_1 * m_2 * (1/g^\wedge(sk_2 * sk_1)) * (g^\wedge(sk_1 * sk_2)/1))$$
$$= (g^\wedge(r_1 * r_2), pk'^\wedge(r_1 * r_2) * m_1 * m_2 * (g^\wedge(sk_1 * sk_2)/g^\wedge(sk_2 * sk_1)))$$
$$= (g^\wedge(r_1 * r_2), pk'^\wedge(r_1 * r_2) * m_1 * m_2)$$

As can be appreciated, according to the last line the homomorphic combination $c_{1,2}$ no longer includes the private keys $sk_1$ and $sk_2$ of the first client 101a and the second client 101b, but only the El Gamal public key pk'.
The same result holds for the case of n clients with n > 2. In this case the homorphic combination of the n clients can be shown to be given by:

$$c_{1,...,n} = c_1 \otimes ... \otimes c_n = (g^\wedge(r_1 * ... * r_n), pk'^\wedge(r_1 * ... * r_n) * m_1 * ... * m_n).$$

Embodiments of the invention can be implemented as privacy enhancing technologies that might be desired in Smart Grid, IoT, Small Cells, CRAN, and Big Data.
Smart grids aim to improve the power system's reliability, security, and efficiency through communication of (proprietary) consumption data and dynamic optimisation of grid operations, maintenance, and planning. Encryption schemes ensure confidential communication between smart meters and other devices. But, these encryption schemes offer no privacy: individual smart meters reveal their consumption data to electricity providers. As a consequence, smart meters are perceived as a privacy threat. Embodiments of the invention overcome this privacy threat. Moreover, the confidentiality of proprietary consumption data is also ensured.

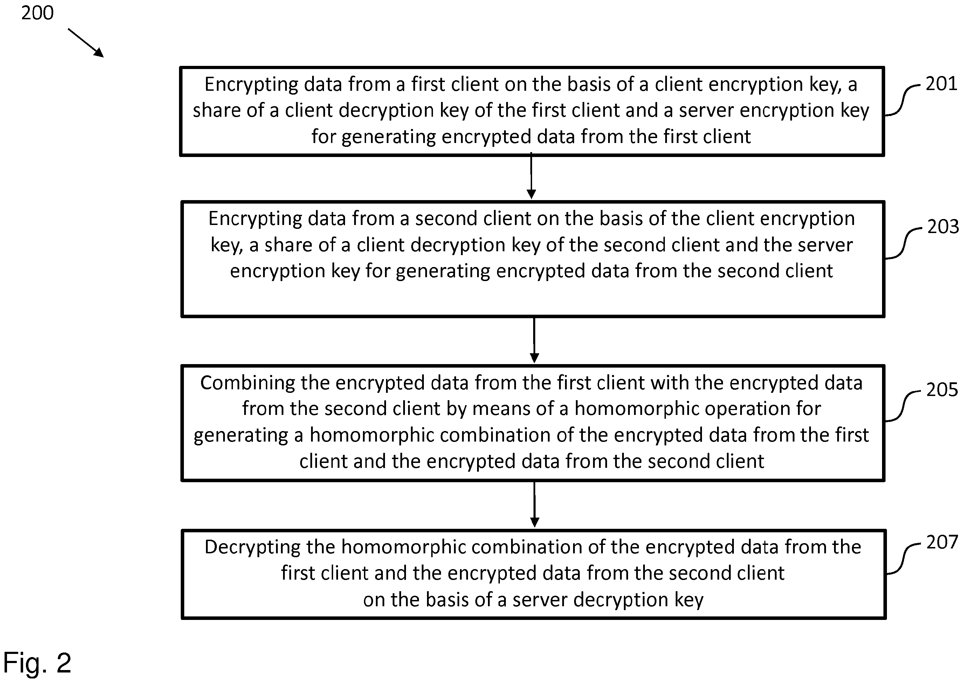

Figure 2 shows a schematic diagram illustrating a corresponding method 200 for securely aggregating data from the first client 101a and the second client 101b by the server 105. As described above, the first client 101a and the second client 101b each have access to a client encryption key pk, a respective first and second share $sk_1$, $sk_2$ of a client decryption key sk and a server encryption key pk and the server 105 has access to a server decryption key sk'.

The method 200 comprises the following steps.

A first step 201 of encrypting data $m_1$ from the first client 101a on the basis of the client encryption key pk, the first share $sk_1$ of the client decryption key sk of the first client 101a and the server encryption key pk' for generating encrypted data $c_1$ from the first client 101a.

A second step 203 of encrypting data $m_2$ from the second client 101b on the basis of the client encryption key pk, the second share $sk_2$ of the client decryption key sk of the second client 101b and the server encryption key pk' for generating encrypted data $c_2$ from the second client 101b.

A third step 205 of combining the encrypted data $c_1$ from the first client 101a with the encrypted data $c_2$ from the second client 101b by means of a homomorphic operation on the basis of the server encryption key pk' for generating a homomorphic combination $c_{1,2}$ of the encrypted data $c_1$ from the first client 101a and the encrypted data $c_2$ from the second client 101b such that the homomorphic combination $c_{1,2}$ depends on the server encryption key pk', but does not depend on the client encryption key pk, the share $sk_1$ of the client decryption key sk of the first client and the share $sk_2$ of the client decryption key sk of the second client. A fourth step 207 of decrypting the homomorphic combination $c_{1,2}$ of the encrypted data $c_1$ from the first client 101a and the encrypted data $c_2$ from the second client 101b on the basis of the server decryption key sk'.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A method (200) of aggregating data from a first client (101a) and a second client (101b), the method comprising:

   • generating, by the first client (101a), encrypted data $c_1$ by calculating:

   **a.)** $c_1 \leftarrow \text{Enc'}(pk', m_1)$,
   **b.)** $c_1 \leftarrow c_1 \otimes (1, (1/pk_2)^\wedge sk_1)$,

   wherein Enc'(...) denotes the enciphering algorithm of the El Gamal encryption scheme or a variant thereof, pk' denotes a server encryption key of a server, $m_1$ denotes data of the first client to be encrypted, $pk_2$ denotes an El Gamal public encryption key of the second client (101b), $sk_1$ denotes an El Gamal private decryption key of the first client (101a) corresponding to an El Gamal public encryption key $pk_1$ of the first client (101a), $\otimes$ denotes an homomorphic combination operator of the El Gamal encryption scheme or a variant thereof and $\wedge$ denotes the exponentiation operator (step 201),
   wherein the first client (101a) has access to the server encryption key pk', the El Gamal public encryption key $pk_2$, and the El Gamal private decryption key $sk_1$,

• generating, by the second client (101b), encrypted data c2 by calculating:

**c.)** $c_2 \leftarrow$ Enc'(pk', $m_2$)
**d.)** $c_2 \leftarrow c_2 \otimes (1, (pk_1/1)^{\wedge}sk_2)$,

wherein m2 denotes data of the second client to be encrypted, $pk_1$ denotes an El Gamal public encryption key of the first client (101a), sk2 denotes an El Gamal private decryption key of the second client (101b) corresponding to an El Gamal public encryption key pk2 of the second client (101b) (step 203), wherein the second client (101b) has access to the server encryption key pk', the El Gamal public encryption key $pk_1$, and the El Gamal private decryption key sk2,

• combining, by a homomorphic combination unit (103a), the encrypted data $c_1$ from the first client (101a) with the encrypted data c2 from the second client (101b) by means of a homomorphic operation in the El Gamal encryption scheme according to:

$$c_{1,2} = c_1 \otimes c_2,$$

thereby arriving at an homomorphic combination $c_{1,2}$ resembling the aggregation of the data from the first client (101a) and the data from the second client (101b) (step 205),

wherein the homomorphic combination $c_{1,2}$ is:

$$c_{1,2} = (g^{\wedge}(r_1 * r_2), pk'^{\wedge}(r_1 * r_2)*m_1*m_2),$$

wherein g is a generator, and $r_1$ and r2 are integers,

• decrypting, by the server (105), the homomorphic combination $c_{1,2}$ of the encrypted data $c_1$ from the first client (101a) and the encrypted data c2 from the second client (101b) on the basis of a server decryption key sk' (step 207), wherein the server (105) has access to the server decryption key sk'.

2. The method (200) according to claim 1, wherein the method (200) comprises the further steps of providing, by a setup device (107 a, b) the El Gamal private decryption key of the first client (101a) $sk_1$, the El Gamal public encryption key of the first client (101a) $pk_1$ and the server encryption key pk' to the first client (101a) and providing, by the setup device (107 a, b), the El Gamal private decryption key of the second client (101a) $sk_2$, the El Gamal public encryption key of the second client (101a) $pk_2$ and the server encryption key pk' to the second client (101b).

3. The method (200) of any one of the preceding claims, wherein the step of decrypting (207) the homomorphic combination $c_{1,2}$ of the encrypted data $c_1$ from the first client (101a) and the encrypted data c2 from the second client (101b) comprises a step of decrypting (207) the homomorphic combination $c_{1,2}$ of the encrypted data $c_1$ from the first client (101a) and the encrypted data c2 from the second client (101b) in a distributed manner on the basis of a first share $sk'_1$ of the server decryption key sk' and a second share $sk'_2$ of the server decryption key sk'.

4. A system (100) for aggregating data, wherein the system (100) comprises a first client (101a), a second client (101b), a homomorphic combination unit (103a), a server (105) and a setup device (107a, b), wherein the system is configured to perform any of the methods according to claims 1 - 3.

**Patentansprüche**

1. Verfahren (200) für Aggregation von Daten von einem ersten Client (101a) und einem zweiten Client (101b), das Verfahren umfassend:

• Erzeugen, durch den ersten Client (101a), von verschlüsselten Daten $c_1$ durch Berechnen von:

**a.)** $c_1 \leftarrow$ Enc'(pk', $m_1$),
**b.)** $c_1 \leftarrow c_1 \otimes (1,(1/pk_2)^{\wedge}sk_1)$,

wobei Enc'(...) den Verschlüsselungsalgorithmus des ElGamal-Verschlüsselungsschemas oder eine Variante davon bezeichnet, pk' einen Server-Verschlüsselungsschlüssel eines Servers bezeichnet, $m_1$ Daten des ersten

zu verschlüsselnden Clients bezeichnet, $pk_2$ einen öffentlichen ElGamal-Verschlüsselungsschlüssel des zweiten Clients (101b) bezeichnet, $sk_1$ einen privaten ElGamal-Entschlüsselungsschlüssel des ersten Clients (101a) bezeichnet, der einem öffentlichen ElGamal-Verschlüsselungsschlüssel $pk_1$ des ersten Clients (101a) entspricht, $\otimes$ einen homomorphen Kombinationsoperator des ElGamal-Verschlüsselungsschemas oder einer Variante davon bezeichnet und $\wedge$ den Potenzierungsoperator bezeichnet (Schritt 201),

wobei der erste Client (101a) Zugriff auf den Server-Verschlüsselungsschlüssel pk', den öffentlichen ElGamal-Verschlüsselungsschlüssel $pk_2$ und den privaten ElGamal-Entschlüsselungsschlüssel $sk_1$ hat,

• Erzeugen, durch den zweiten Client (101b), von verschlüsselten Daten $c_2$ durch Berechnen von:

    **a.)** $c_2 \leftarrow$ Enc'(pk', $m_2$),
    **b.)** $c_2 \leftarrow c_2 \otimes (1, (pk_1/1)^\wedge sk_2)$,

wobei $m_2$ zu verschlüsselnde Daten des zweiten Clients bezeichnet, $pk_1$ einen öffentlichen ElGamal-Verschlüsselungsschlüssel des ersten Clients (101a) bezeichnet, $sk_2$ einen privaten ElGamal-Entschlüsselungsschlüssel des zweiten Clients (101b) bezeichnet, der einem öffentlichen ElGamal-Verschlüsselungsschlüssel $pk_2$ des zweiten Clients (101b) (Schritt 203) entspricht,

wobei der zweite Client (101b) Zugriff auf den Server-Verschlüsselungsschlüssel pk', den öffentlichen ElGamal-Verschlüsselungsschlüssel $pk_1$ und den privaten ElGamal-Entschlüsselungsschlüssel $sk_2$ hat,

• Kombinieren, durch eine homomorphe Kombinationseinheit (103a), der verschlüsselten Daten $c_1$ von dem ersten Client (101a) mit den verschlüsselten Daten $c_2$ von dem zweiten Client (101b) mittels einer homomorphen Operation in dem ElGamal-Verschlüsselungsschema gemäß:

$$c_{1,2} = c_1 \otimes c_2,$$

wodurch zu einer homomorphen Kombination $c_{1,2}$ gelangt wird, die der Aggregation der Daten von dem ersten Client (101a) und der Daten von dem zweiten Client (101b) ähnelt (Schritt 205),

wobei die homomorphe Kombination $c_{1,2}$ lautet:

$$c_{1,2} = (g^\wedge(r_1 * r_2), pk'^\wedge(r_1 * r_2)*m_1*m_2),$$

wobei g ein Generator ist, und $r_1$ und $r_2$ ganze Zahlen sind,

• Entschlüsseln, durch den Server (105), der homomorphen Kombination $c_{1,2}$ der verschlüsselten Daten $c_1$ von dem ersten Client (101a) und der verschlüsselten Daten $c_2$ von dem zweiten Client (101b) auf der Basis eines Server-Entschlüsselungsschlüssels sk' (Schritt 207), wobei der Server (105) Zugriff auf den Server-Entschlüsselungsschlüssel sk' hat.

2. Verfahren (200) nach Anspruch 1, wobei das Verfahren (200) die folgenden weiteren Schritte umfasst: Bereitstellen, durch eine Einrichtungsvorrichtung (107a, b) des privaten ElGamal-Entschlüsselungsschlüssels des ersten Clients (101a) $sk_1$, des öffentlichen ElGamal-Verschlüsselungsschlüssels des ersten Clients (101a) $pk_1$ und des Server-Verschlüsselungsschlüssels pk' für den ersten Client (101a) und Bereitstellen, durch die Einrichtungsvorrichtung (107a, b), des privaten ElGamal-Entschlüsselungsschlüssels des zweiten Clients (101a) $sk_2$, des öffentlichen ElGamal-Verschlüsselungsschlüssels des zweiten Clients (101a) $pk_2$ und des Server-Verschlüsselungsschlüssels pk' für den zweiten Client (101b).

3. Verfahren (200) nach einem der vorhergehenden Ansprüche, wobei der Schritt des Entschlüsselns (207) der homomorphen Kombination $c_{1,2}$ der verschlüsselten Daten $c_1$ von dem ersten Client (101a) und der verschlüsselten Daten $c_2$ von dem zweiten Client (101b) einen Schritt des Entschlüsselns (207) der homomorphen Kombination $c_{1,2}$ der verschlüsselten Daten $c_1$ von dem ersten Client (101a) und der verschlüsselten Daten $c_2$ vom zweiten Client (101b) auf verteilte Weise auf der Basis eines ersten Teils $sk'_1$ des Server-Entschlüsselungsschlüssels sk' und eines zweiten Teils $sk'_2$ des Server-Entschlüsselungsschlüssels sk' umfasst.

4. System (100) zum Aggregieren von Daten, wobei das System (100) einen ersten Client (101a), einen zweiten Client (101b), eine homomorphe Kombinationseinheit (103a), einen Server (105) und eine Einrichtungsvorrichtung (107a, b) umfasst, wobei das System konfiguriert ist, um eines der Verfahren gemäß den Ansprüchen 1 bis 3 durchzuführen.

**Revendications**

1. Procédé (200) d'agrégation de données provenant d'un premier client (101a) et d'un deuxième client (101b), le procédé comprenant :

   • la génération, par le premier client (101a), de données chiffrées $c_1$ par calcul de :

   **a.)** $c_1 \leftarrow$ Enc'(pk', $m_1$),
   **b.)** $c_1 \leftarrow c_1 \otimes (1, (1/pk_2)^{\wedge}sk_1)$,
   Enc'(...) désignant l'algorithme de chiffrement du schéma de chiffrement d'Elgamal ou d'une variante de celui-ci, pk' désignant une clé de chiffrement de serveur d'un serveur, $m_1$ désignant des données du premier client à chiffrer, $pk_2$ désignant une clé de chiffrement publique d'Elgamal du deuxième client (101b), $sk_1$ désignant une clé de déchiffrement privée d'Elgamal du premier client (101a) correspondant à une clé de chiffrement publique d'Elgamal $pk_1$ du premier client (101a) , $\otimes$ désignant un opérateur de combinaison homomorphe du schéma de chiffrement d'Elgamal ou d'une variante de celui-ci et $^$ désignant l'opérateur d'exponentiation (étape 201),
   le premier client (101a) ayant accès à la clé de chiffrement de serveur pk', à la clé de chiffrement publique d'Elgamal $pk_2$ et à la clé de déchiffrement privée d'Elgamal $sk_1$,

   • la génération, par le deuxième client (101b), de données chiffrées $c_2$ par calcul de :

   **c.)** $c_2 \leftarrow$ Enc'(pk', $m_2$)
   **d.)** $c_2 \leftarrow c_2 \otimes (1, (pk_1/1)^{\wedge}sk_2)$,
   $m_2$ désignant des données du deuxième client à chiffrer, $pk_1$ désignant une clé de chiffrement publique d'Elgamal du premier client (101a), $sk_2$ désignant une clé de déchiffrement privée d'Elgamal du deuxième client (101b) correspondant à une clé de chiffrement publique d'Elgamal $pk_2$ du deuxième client (101b) (étape 203),
   le deuxième client (101b) ayant accès à la clé de chiffrement de serveur pk', à la clé de chiffrement publique d'Elgamal $pk_1$ et à la clé de déchiffrement privée d'Elgamal $sk_2$,

   • la combinaison, par une unité de combinaison homomorphe (103a), des données chiffrées $c_1$ provenant du premier client (101a) aux données chiffrées $c_2$ provenant du deuxième client (101b) au moyen d'une opération homomorphe dans le schéma de chiffrement d'Elgamal selon :

   $$c_{1,2} = c_1 \otimes c_2,$$

   ce qui permet de parvenir à une combinaison homomorphe $c_{1,2}$ ressemblant à l'agrégation des données provenant du premier client (101a) et des données provenant du deuxième client (101b) (étape 205),
   la combinaison homomorphe $c_{1,2}$ étant :

   $$c_{1,2} = (g^{\wedge}(r_1 * r_2), pk'^{\wedge}(r_1 * r_2)*m_1*m_2),$$

   g étant un générateur, et $r_1$ et $r_2$ étant des entiers,
   • le déchiffrement, par le serveur (105), de la combinaison homomorphe $c_{1,2}$ des données chiffrées $c_1$ provenant du premier client (101a) et des données chiffrées $c_2$ provenant du deuxième client (101b) sur la base d'une clé de déchiffrement de serveur sk' (étape 207),
   le serveur (105) ayant accès à la clé de déchiffrement de serveur sk'.

2. Procédé (200) selon la revendication 1, le procédé (200) comprenant les étapes supplémentaires de fourniture, par un dispositif de configuration (107 a, b), de la clé de déchiffrement privée d'Elgamal du premier client (101a) $sk_1$, de la clé de chiffrement publique d'Elgamal du premier client (101a) $pk_1$ et de la clé de chiffrement de serveur pk' au premier client (101a), et de fourniture, par le dispositif de configuration (107 a, b), de la clé de déchiffrement privée d'Elgamal du deuxième client (101a) $sk_2$, de la clé de chiffrement publique d'Elgamal du deuxième client (101a) $pk_2$ et de la clé de chiffrement de serveur pk' au deuxième client (101b).

3. Procédé (200) selon l'une quelconque des revendications précédentes, dans lequel l'étape de déchiffrement (207) de la combinaison homomorphe $c_{1,2}$ des données chiffrées $c_1$ provenant du premier client (101a) et des données chiffrées $c_2$ provenant du deuxième client (101b) comprend une étape de déchiffrement (207) de la combinaison homomorphe $c_{1,2}$ des données chiffrées $c_1$ provenant du premier client (101a) et des données chiffrées $c_2$ provenant du deuxième client (101b) d'une manière répartie sur la base d'un premier partage $sk'_1$ de la clé de déchiffrement de serveur $sk'$ et d'un deuxième partage $sk'_2$ de la clé de déchiffrement de serveur $sk'$.

4. Système (100) d'agrégation de données, le système (100) comprenant un premier client (101a), un deuxième client (101b), une unité de combinaison homomorphe (103a), un serveur (105) et un dispositif de configuration (107a, b), le système étant configuré pour réaliser l'un quelconque des procédés selon les revendications 1 à 3.

Fig. 1

Fig. 2

EP 3 345 335 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016051122 A1

- WO 2012103896 A1